# EUROPEAN PATENT APPLICATION

(11) **EP 1 956 511 A2**
(43) Date of publication of application: **13.08.2008**
(21) Application number: 08151204.8
(22) Date of filing: 08.02.2008
(51) Int. Cl.: G06F 21/00

(54) **Method and system for function license authentication**

(30) Priority: 09.02.2007 JP 2007030564
(71) Applicant: NEC Infrontia Corporation, 2-6-1, Kitamikata, Takatsu-ku Kanagawa Kawasaki-shi, 213-0005 (JP)
(72) Inventor: Nakagawa, Hiroaki, Kawasaki-shi Kanagawa 213-0005 (JP); Nishide, Nobuo, Kawasaki-shi Kanagawa 213-0005 (JP)
(74) Representative: Vossius & Partner

(57) **Abstract**

There is provided a function license authentication method and system capable of preventing the illegal creation of a license key.

A function license authentication method comprising: a step in which an authentication server generates a function code based on order in which functions used have been coded; a step in which a user transfers an equipment-specific code to the authentication server; a step in which the authentication server generates a first license key based on the function code and equipment-specific code; a step in which the user inputs the coded order to the equipment; a step in which the user acquires the first license key from the authentication server and inputs the acquired first license key to the equipment; a step in which the equipment generates a function code based on the coded order that has been input thereto and further generates a second license key based on the generated function code and equipment specific code; and a step in which the equipment compares the first and second license keys and determines that authentication is successfully completed when the first and second license keys coincide with each other.

## Description

This application is based upon and claims the benefit of priority from Japanese patent application No. 2007-030564, filed on February, 9th, 2007, the disclosure of which is incorporated herein in its entirety by reference.

The present invention relates to a function license authentication method and system for acquiring a license for utilizing a function of an equipment (telephone system, etc.).

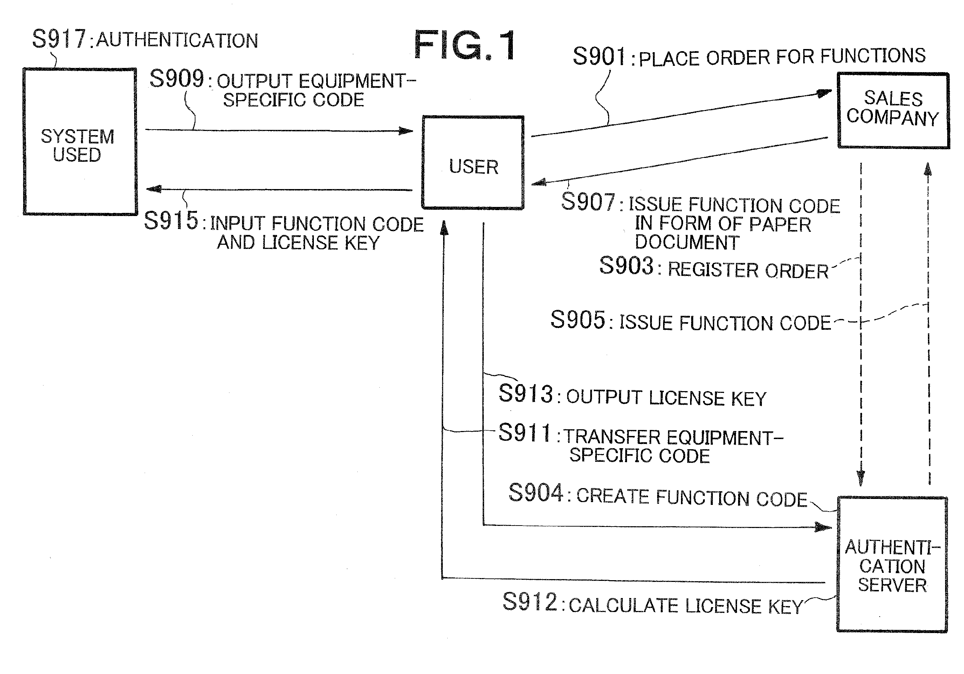

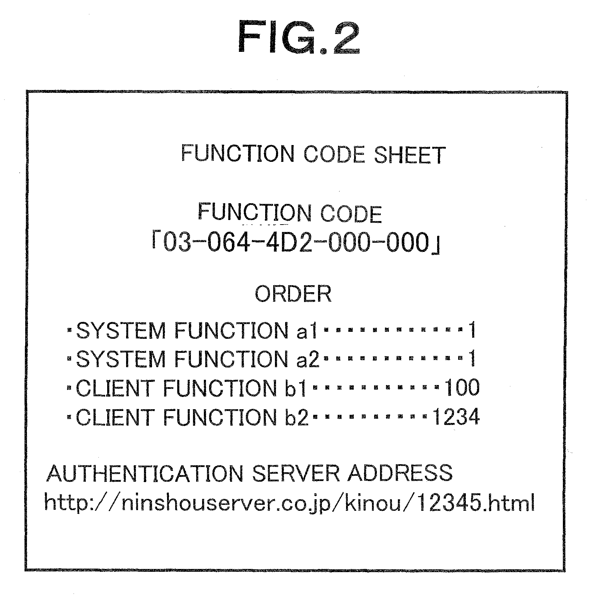

A conventional issuance procedure of a license key and an authentication procedure performed in an equipment will hereinafter be described.
"Function code", which represents the content of a function of canceling usage restrictions, is used for informing an equipment of the content of a function to be canceled. The "function code" is used also in authentication.
"Equipment-specific code", which is a number specific to individual equipments, is assigned to an equipment in a factory at its manufacturing time. The "equipment-specific code" needs to be difficult to rewrite after manufacturing in a factory.
"License key" is created based on the "equipment-specific code" and "function code". An equipment uses the license key" for confirming whether an input license key has been authenticated or not.
A conventional authentication operation is performed according to a procedure shown in FIG. 1.
(1) A user places an order for a function of an equipment used, function for each client, and number of clients with a sales company (step S901).
(2) The sales company registers the order in an authentication server (step S903).
(3) The authentication server creates the "function code" based on the order (step S904).
(4) The sale company acquires the "function key" from the authentication server (step S905).
(5) The sales company prints the "function code", order, and address of the authentication server on a paper (see FIG. 2) and sells the functions to the user (step S907).
(6) The user uses an equipment being used to read in the "function-specific code" (step S909).
(7) The user accesses the authentication server and inputs the "function-specific code" to the authentication server.
(8) The authentication server calculates the "license key" from the "equipment-specific code" and "function code" (step S912).
(9) The user acquires the "license key" from the authentication server (S913).
(10) The user inputs the "function code" and "license key" to the equipment (step S915).
(11) The equipment calculates the "license key" from the input "function code" and "equipment-specific code" stored therein and compares the calculated "license key" with the input "license key". When both the license keys coincide with each other, the equipment determines that the "function code" has successfully been authenticated and activates the function corresponding to the "function code" (step S917).

The "function code", "equipment-specific code", and "license key" are created/calculated as follows.

The "function code", which represents the content of a function of canceling usage restrictions, is created as follows.

The equipment uses eight functions of a1, a2, a3, a4, a5, a6, a7, and a8, which determine only ON/OFF.

Up to 4095 clients can be connected simultaneously in the equipment, and the clients can use four functions of b1, b2, b3, and b4.

8 bits are necessary to represent the ON/OFF of the functions used by the equipment as a bit string.

In the case where only the function a is ON, a bit string obtained is 00000001 which is "01" when represented as a hexadecimal number.

In the case where only the function a1 is OFF and functions a2, a3, a4, a5, a6, a7, and a8 are ON, a bit string obtained is 1111110 which is "FE" when represented as a hexadecimal number.

In the setting of the client function, the number of clients allowed to use each function is set. In the case where the number of clients allowed to use the function b1 is 0, "000" is obtained using the hexadecimal representation and, similarly, in the case where the number of clients allowed to use the function b1 is 4095, "FFF" is obtained.

Similarly, 3 digits (from "000" to "FFF") are necessary to represent the function b2 as a hexadecimal number.

When all the functions are represented as a hexadecimal number, 2 digits (from "00" to "FF") are necessary for respective functions a1, a2, a3, a4, a5, a6, a7, and a8, 3 digits (from "000" to "FFF") are necessary for the function b1 and, similarly, 3 digits (from "000" to "FFF") are necessary for the functions b2 and b4 respectively. In total, 14 digits (from "00 000 000 000 000" to "FFFFFFFFFFFFFF") are necessary. If another function b5 for the client is added, 17 digits are necessary.

The "equipment-specific code" is supplied in the form of a serial number or MAC address. It is assumed here that hexadecimal numbers from 0000 to FFFF are assigned to the "equipment-specific code".

There are available various creation methods of the "license key". Here, as an example, a product of the "equipment-specific code and "function code" is calculated.

Assuming that the equipment-specific code is "ABCD" and function code is "030644D2000000", obtained license key is "79BFD622A000000". Thus, different values need to be obtained for the license key in the case where different equipment-specific codes are input, although the function code is the same.

The function code and license key are authenticated as follows. The license key is calculated both in the authentication server and equipment. The value of the license key calculated using the same function code and same equipment-specific code according to the same rule ("multiplication", in this case) becomes the same. The license key calculated in the authentication server is input to the equipment side. When a comparison result between the value of the license key calculated in the equipment and value of the input license key is the same, i.e., matched, authentication is achieved. In the case where the license key authenticated in one equipment is input to another equipment, a license key calculated in the equipment differs from the input license key since the equipment-specific codes are different, authentication fails.
[Patent Document 1] JP-A-2004-252931
[Patent Document 2] JP-A-2006-031320
[Patent Document 3] JP-A-2006-059164
[Patent Document 4] JP-A-2006-195826

In a conventional system, the number of functions whose usage restrictions are to be canceled, the number of clients to be managed, and numbers specific to a target equipment are included in the license key issued to a user. Thus, irrespective of whether codes used in the system are encrypted or not, a calculation method of the license key can be estimated and therefore there is a danger that the license key is illegally created. Further, when the number of functions to be managed is large, the number of digits of the issued license key becomes enormous, making input operation of the license key complicated.

An object of the present invention is therefore to provide a function license authentication method and system capable of preventing the illegal creation of a license key.

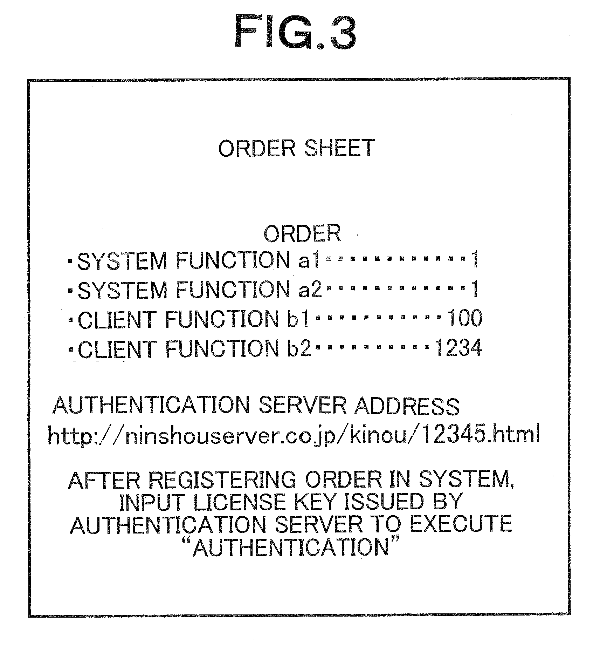

In the present invention, the following modifications are made.
<1> "Function code" that has conventionally been written in a function code sheet is not issued but, instead, an order sheet (FIG. 3) only describing order items is issued.
   Although the authentication server receives as an input the order from the sales company and creates "function code", it does not output the created "function code".
<2> The user does not input "function code" that the user has conventionally input to the equipment.
<3> The user inputs the order to the equipment.

The equipment does not require input of the "function code", but the user inputs the order to the equipment. The equipment activates a function according to the input order. A tentative "function code" is created based on the input of the order. "License key" is calculated from the tentative "function code" and "equipment-specific code".

Although, in the conventional system, it is necessary to input the "function code" supplied from the sales company to the equipment, the input operation of the "function code" is unnecessary in the present invention.

Since the "function code" becomes unnecessary, the "function code" cannot illegally be created.

Further, since the "function code" is not disclosed to the user, it becomes hard to estimate how to calculate the "license key" which is calculated from the order and "equipment-specific code", making it difficult to illegally create the "license key", that is, making it difficult to illegally cancel the usage restrictions on the function.

Although, in the method according to the present invention, input operation of the "order" is necessary, the operation involves inputting only numerals as specified on the order sheet, which places a less burden on the user as compared to the input operation of "function code" which is composed of characters meaninglessly arranged.

The invention is further explained with reference to the drawings:
FIG. 1 is a block diagram showing a configuration of a conventional function license authentication system;
FIG. 2 is a view showing an example of a function code sheet issued to a user in a system shown in FIG. 1;
FIG. 3 is a view showing an example of an order sheet issued to a user in a system shown in FIG. 4;
FIG. 4 is a block diagram showing a configuration of a function license authentication system according to an embodiment of the present invention; and

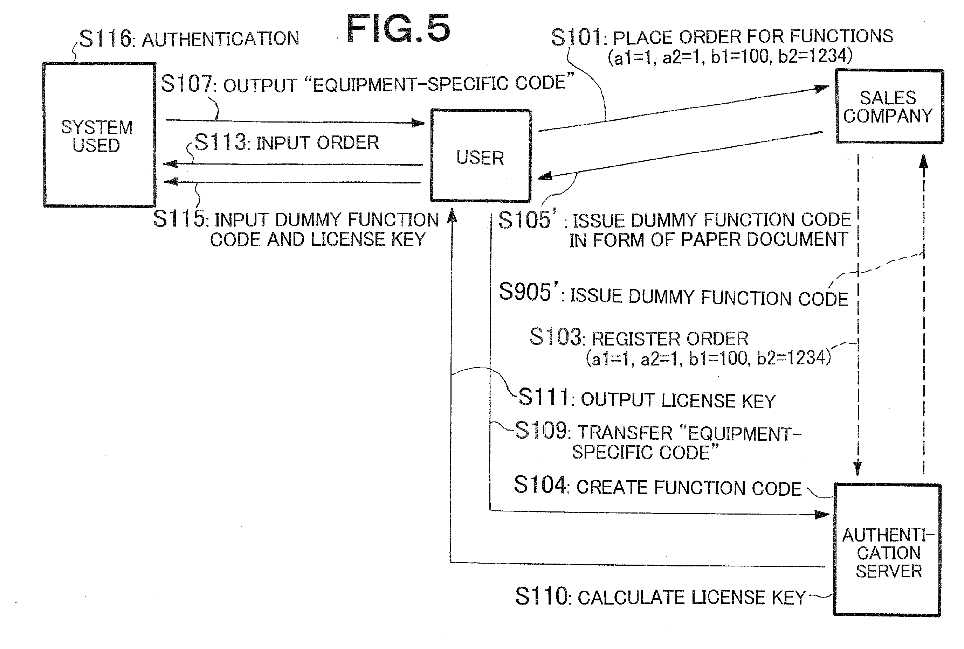

FIG. 5 is a block diagram showing a configuration of a function license authentication system according to another embodiment of the present invention.

There exists an equipment in which usage restrictions are placed on functions of a software and hardware component and the usage restrictions are canceled by using license keys which are available from a sales company. Conventionally, the following conditions are required for creation of the license key. The first condition is that the number specific to the equipment is included in the license key for preventing illegal use of the license key. The second condition is that the content of a function whose usage restrictions are to be canceled is included in the license key. When a license key satisfying the first and second conditions is issued after being subjected to arithmetic processing such as encryption, an equipment to which the license key has been input needs to perform inverse arithmetic processing or needs to use a decryption key. However, when a configuration allowing inverse arithmetic processing is adopted to a system, security of the system is weakened. Further, handling of the decryption key is very complicated.

Thus, the present invention provides an authentication method capable of simplifying input operation of the license key and preventing a decrease of security.

A preferred embodiment of the present invention will be described below in detail with reference to the accompanying drawings.

In a telephone equipment such as a PBX, various functions are provided for the equipment and for each telephone set. The use of these functions is usually restricted. A user places an order for a function of the equipment used and functions provided for each telephone set by the amount corresponding to required telephone sets. A sales company of the telephone equipment needs to allow the user to use the function of the telephone equipment and functions of each telephone set according to the user's order.

It is assumed, for example, that the telephone equipment can support up to 4095 telephone sets.

It is assumed that a1, a2, a3, a4, a5, a6, a7, and a8 are prepared as a function of the equipment.

It is assumed that b1, b2, b3, and b4 are prepared as a function of each of the telephone set.

The user and sales company perform the following operation to cancel usage restrictions on the functions.

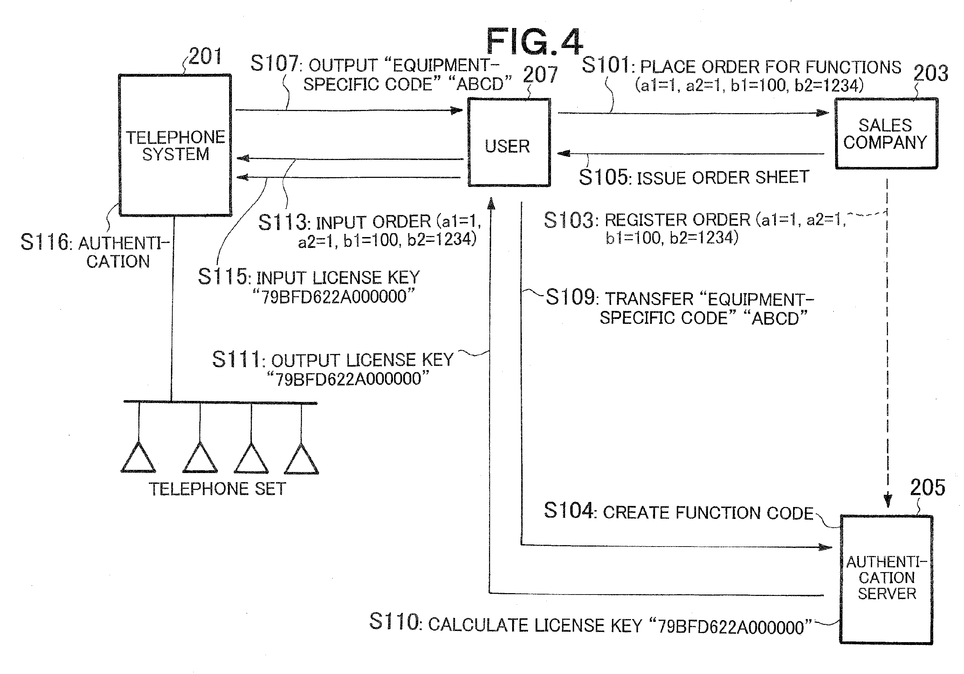

With reference to FIG. 4, a function license authentication method according to the present invention will be described.
(1) A user 207 places an order for the functions a1 and a2 and functions b1 by the amount corresponding to 100 telephone sets and function b2 by the amount corresponding to 1234 telephone sets with a sales company 203 (step S101).
(2) The sales company 203 registers the order in an authentication server 205 (step S103).
(3) An authentication server 205 creates the following "function code" based on the order and records it (step S104). The "function code" is "030644D2000000".
(4) The sales company 203 issues an order sheet (see FIG. 3) describing the order and address of the authentication server 205 and sells it to the user 207 (step S105).
(5) The user 207 uses an equipment (telephone system 201, etc.) being used to read in "function-specinc code" ("ABCD") (step S107).
(6) The user 207 accesses the address written in the order sheet and inputs the "equipment-specific code" ("ABCD") to the authentication server 205 (step S109). The authentication server 205 calculates "license key" ("79BFD622A000000") from the "equipment-specific code" ("ABCD") and "function code" ("030644D2000000") (step S110).
(7) The user 207 acquires the "license key" ("79BFD622A000000") from the authentication server 205 (step S111).
(8) The user 207 inputs the order (a1=1, a2=1, b1=100, b2=1234) to the equipment (telephone system 201, etc.) through a menu window on the equipment (step S113).
(9) The user 207 inputs the "license key" ("79BFD622A000000") to the equipment (telephone system 201, etc.) (step S115).

The equipment (telephone system 201, etc.) creates "function code" ("030644D2000000") based on the order input in (8). Further, the equipment creates "license key" ("79BFD622A000000") from the "equipment-specific code" ("ABCD") stored therein and "function code" ("030644D2000000") created from the order. The equipment then compares the "license key" input in (9) and "license key" calculated therein. Since the both license keys coincide with each other, the order input in (8) is authenticated, and the equipment activates its function (step S116).

The equipment on which usage restrictions of function can be imposed includes a telephone equipment, a server, and the like.

The "function code" may be represented as a binary number, decimal number, hexadecimal number, ASCII code, or may be encrypted.

The "function code" may be generated not only from the content of the function but also from a combination of the content of the function and issuance date or random numbers.

The calculation method of the "license key" includes not only multiplication but also various methods including encryption.

Although the "license key" describes all digits in the above embodiment, calculated check sum may be used or a part of all the digits may be used for authentication.

There is no restriction imposed on the number of functions that can be managed in the present invention.

There is available another method obtained by combining conventional method and the present invention. That is, a meaningless value such as random number is written, as the function key, in the function code sheet, and actual authentication is not performed using the value.

The "function code" and "order sheet" may be supplied not only in the form of a paper document but also on E-mail, through a Web site on the Internet. Alternatively, the "function code" and "order sheet" may automatically be supplied when the equipment accesses the Internet.

Although the exemplary embodiments of the present invention have been described in detail, it should be understood that various changes, substitutions and alternatives can be made therein without departing from the sprit and scope of the invention as defined by the appended claims. Further, it is the inventor's intent to retain all equivalents of the claimed invention even if the claims are amended during prosecution.

## Claims

1. A function license authentication method comprising:
a step in which an authentication server generates a function code based on order in which functions used have been coded;
a step in which a user transfers an equipment-specific code to the authentication server;
a step in which the authentication server generates a first license key based on the function code and equipment-specific code;
a step in which the user inputs the coded order to the equipment;
a step in which the user acquires the first license key from the authentication server and inputs the acquired first license key to the equipment;
a step in which the equipment generates a function code based on the coded order that has been input thereto and further generates a second license key based on the generated function code and equipment-specific code; and
a step in which the equipment compares the first and second license keys and determines that authentication is successfully completed when the first and second license keys coincide with each other.

2. The function license authentication method according to claim 1, wherein
the URL of the authentication server is written in an order sheet supplied from a sales company to the user.

3. The function license authentication method according to claim 2, wherein
coded functions are also written in the order sheet.

4. A function license authentication system comprising an authentication server and an equipment, wherein
the authentication server generates a function code based on order in which functions used have been coded,
a user transfers an equipment-specific code to the authentication server,
the authentication server generates a first license key based on the function code and equipment-specific code,
the user inputs the coded order to the equipment,
the user acquires the first license key from the authentication server and inputs the acquired first license key to the equipment,
the equipment generates a function code based on the coded order that has been input thereto and further generates a second license key based on the generated function code and equipment-specific code, and
the equipment compares the first and second license keys and determines that authentication is successfully completed when the first and second license keys coincide with each other.

5. The function license authentication system according to claim 4, wherein
the URL of the authentication server is written in an order sheet supplied from a sales company to the user.

6. The function license authentication system according to claim 5, wherein
coded functions are also written in the order sheet.
